# EUROPÄISCHE PATENTANMELDUNG

(11) **EP 1 450 323 A1**
(43) Veröffentlichungstag der Anmeldung: **25.08.2004**
(21) Anmeldenummer: 03100435.1
(22) Anmeldetag: 21.02.2003
(51) Int. Cl.: G07F 19/00

(54) **Verfahren und Plattform, um einen Benutzer bei einem Dienst zu registrieren**

(71) Anmelder: Swisscom Mobile AG, 3050 Bern (CH)
(72) Erfinder: Busch Lauper, Karin, 3014, Bern (CH); Cantini, Renato, 1782, Belfaux (CH)
(74) Vertreter: Saam, Christophe

(57) **Zusammenfassung**

Verfahren, um einen Benutzer (1) bei einem Dienst eines Dienstanbieters (4) zu registrieren, umfassend:
ein Geheimnis (40) wird mit allgemeinen Geschäftsbedingungen (41) für den benannten Dienst verknüpft,
die benannten allgemeinen Geschäftsbedingungen werden mit dem benannten Geheimnis an den benannten Benutzer (1) gesendet,
der benannte Benutzer (1) gibt das benannte Geheimnis in einem Terminal (11) ein,
das benannte Geheimnis wird in einer elektronischen Meldung an eine Registrierungsplattform (34) gesendet,
das gesendete Geheimnis (40) wird in der benannten Registrierungsplattform (34) mit dem ursprünglichen Geheimnis verglichen,
falls beide Geheimnisse übereinstimmen, wird der benannte Benutzer für weitere Zugriffe auf den benannten Dienst registriert.

## Beschreibung

Die vorliegende Erfindung betrifft ein Verfahren und ein System, um einen Benutzer bei einem Dienst eines Dienstanbieters zu registrieren.

Immer mehr Dienstleistungen basieren auf elektronischen Identifizierungsmodulen, insbesondere Chipkarten.Gemäss dem bisherigen Stand der Technik werden Zahlungstransaktionen zwischen einem Kunden (Benutzer, zum Beispiel einem Mobilteilnehmer) und einem Anbieter (beispielsweise einem Händler) oft mit einer elektronischen Zahlungskarte ausgeführt. Debit- und Kreditkarten werden zum Beispiel an Kassen in Geschäften, bei Tankstellen usw. verwendet. Die Karte umfasst meistens Speichermittel (zum Beispiel einen Magnetstreifen und/oder einen Chip) in welchen unter anderem die Identifizierung des Kunden gespeichert ist. Um eine Transaktion zu tätigen (zum Beispiel um in einem Geschäft einen Artikel zu bezahlen) muss der Benutzer seine Karte beim Händler in einen geeigneten Kartenleser einschieben. Das Terminal liest dann die Identifizierung des Geldkontos (zum Beispiel die PAN, Primary Account Number) in der Karte, ermittelt und zeigt den zu bezahlenden Betrag an, prüft gegebenenfalls die Solvenz des Benutzers und fordert vom Benutzer, dass er die Transaktion mit einer Bestätigungstaste auf dem Händler-Terminal bestätigt. Wenn der Kunde solvent ist und seine Bestätigung eingegeben hat, werden die Geldkontoinhaber-Identifizierung, der zu bezahlende Betrag und evtl. auch eine Terminal-Identifizierung an einen durch ein Telekommunikationsnetz mit dem Terminal verbundenen Finanzserver übermittelt. Entsprechend wird das Konto des Benutzers bei diesem Zahlungsdienstanbieterserver sofort oder später belastet.

Anbieter verfügen immer öfter über "virtuelle Terminals" (zum Beispiel Software-Komponenten), die für Zahlungstransaktionen mit einer Geldkarte miteinander kooperieren. In der nachfolgenden Beschreibung wird deshalb von Anbieter-Zahlungsmodul gesprochen, wobei das Modul entweder ein physisches Terminal sein kann oder eine Software-Anwendung.

Man unterscheidet bei kartenbasierten Zahlungssystemen zwischen Wertkarten (oder elektronisches Geld), Kreditkarten und Debitkarten. Bei Wertkarten weist die Zahlungskarte meist einen Speicherbereich auf, in welchen (in der Regel zuvor) ein Geldbetrag geladen wurde (Prepaid). Der Geldbetrag kann aus Sicherheitsgründen oft auch in einem Fernserver gespeichert werden; in diesem Fall kann die Wertkarte nur eine Identifizierung des entsprechenden Kontos in diesem Server umfassen. Bei Kreditkarten ist die Karte an ein Konto des Benutzers bei einem Finanzinstitut gebunden, wobei dieses Konto erst nach der Transaktion belastet wird (pay later). Bei Debitkarten hingegen muss das gebundene Konto beim Finanzinstitut im voraus geladen werden und wird während oder unmittelbar nach der Transaktion belastet (pay now).

Nachteilig in diesen Verfahren ist die Notwendigkeit, die Karte des Benutzers in ein fremdes Gerät einschieben zu müssen. Die Benutzer haben normalerweise ihre Karte nicht zur Hand, sondern zum Beispiel im Portemonnaie; eine sehr schnelle Transaktion ist also nicht möglich.

Diese Karten enthalten eine Geldkontoinhaber-Identifizierung, die indes nur erlaubt, die Benutzer beim Zahlungsdienstanbieter identifizieren zu lassen. Eine Karte kann also normalerweise nur dann für eine finanzielle Transaktion benutzt werden, wenn der Benutzer und der Anbieter beim gleichen Zahlungsdienstanbieter affiliiert sind. Dagegen ist der Gebrauch der Karte nicht für andere Arten von Transaktionen (zum Beispiel für nicht-finanzielle Transaktionen) vorgesehen. Für den Benutzer ist es also unumgänglich, stets eine grosse Anzahl von Karten für jegliche Arten von finanziellen oder nicht-finanziellen Transaktionen zu besitzen, zum Beispiel mehrere Wert-, Debit- oder Kreditkarten, die von verschiedenen Finanzinstituten oder Ladenketten verwaltet werden, oder Abonnementskarten oder Zugangskarten für geschützte Zonen. Diese Karten sind meistens durch verschiedene Pin-Codes geschützt, die sich der Benutzer mühsam einprägen muss. Ausserdem müssen sowohl Benutzer als auch Händler verschiedene Konten verwalten, das heisst für jedes Konto die allgemeinen Geschäftsbedingungen studieren, Prepaid und Wertkonten im voraus nachladen, Kontoauszüge prüfen, usw.

Um diese Probleme zu vermeiden, wurde unter anderem in der Patentanmeldung WO98/37524 vorgeschlagen, die SIM-Karte(Subscriber Identity Module) zur Identifizierung des Benutzers in einem Mobilfunksystem als elektronische Zahlungskarte zu verwenden. Zur Übertragung der Transaktionsdaten wird eine kontaktlose Verbindung (zum Beispiel eine infrarote Verbindung) zwischen dem Benutzermobilgerät und dem Anbieterterminal aufgebaut. Dadurch erübrigt sich für den Benutzer die Notwendigkeit, eine elektronische Karte aus dem Portemonnaie zu ziehen und in ein fremdes Gerät einzuschieben.

Es sind beim bisherigen Stand der Technik auch Zahlungsverfahren bekannt, bei welchen Transaktionsdaten zwischen dem Benutzermobilgerät und einem Händlerterminal nicht direkt, sondern über eine Zahlungsplattform im Mobilfunknetz übertragen werden. Dabei werden Belege oder eine Referenz zur Transaktion oft über SMS (Short-Message Service) oder USSD (Unstructured Supplementary Service Data) übertragen. Diese Lösungen haben den Vorteil, dass keine umständliche und sicherheitskritische direkte Verbindung zwischen Mobilgerät und Terminal aufgebaut werden muss. Ausserdem erlauben Sie auch Transaktionen zwischen Benutzer und Anbieter, die sich nicht in unmittelbarer Nähe voneinander befinden.

Es sind beim bisherigen Stand der Technik auch Zahlungsverfahren bekannt, bei welchen eine einzige Zahlungskarte mit mehreren Geldkonten verbunden ist. Dadurch erübrigt sich für den Benutzer die Notwendigkeit, mehrere Zahlungskarten bei sich zu haben.

Verschiedene Geldkonten werden oft an unterschiedliche Geschäftsbedingungen gebunden. Dies ist insbesondere dann der Fall, wenn diese Geldkonten von unterschiedlichen Zahlungsdienstanbietern angeboten werden. Folgende Klauseln befinden sich oft in allgemeinen Geschäftsbedingungen für Geldkonten und Zahlungskarten:
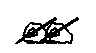 Eingehen eines Geldkontovertrags
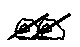 Änderung eines Geldkontovertrags
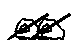 Aufhebung eines Geldkontovertrags
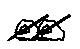 Gültigkeit und Verlängerung des Geldkontovertrags
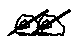 Blockieren eines Geldkontos.
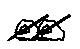 Benutzung des Geldkontos, zum Beispiel Benutzungszwecke
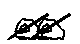 Kredit- oder Debit-Grenzen
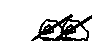 Versicherung, Haftung und Verantwortlichkeit, unter anderem bei Diebstahl des gebundenen Identifizierungsmoduls, Missbrauch, usw.
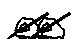 Verschiedene Bestimmungen
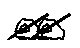 Andere zahlungsdienstabhängige Klauseln.
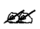 Usw.

Damit diese allgemeinen Geschäftsbedingungen, kurz AGB, von Gerichten und anderen Behörden anerkannt werden, muss zumindest sichergestellt werden, dass sie vom Benutzer gelesen wurden. Es reicht nämlich nicht, wenn der Benutzer sie einfach erhalten hat; man kann insbesondere nicht von allen Benutzern erwarten, dass sie in elektronischer Form erhaltene Geschäftsbedingungen lesen und studieren. Deshalb wurde durch verschiedene Gerichte mehrmals konsequent entschieden, dass das blosse Anzeigen von kleingeschriebenen Geschäftsbedingungen auf einem Bildschirm mit der Option für den Benutzer, diese durch Anklicken eines Knopfes zu akzeptieren, keine oder kaum rechtliche Wirkungen hat.

Dies sollte für Dienste, die auf Mobilgeräten (zum Beispiel Mobiltelefone) basieren umso mehr der Fall sein. Es reicht daher nicht, AGB auf dem Bildschirm eines Mobilgeräts anzeigen zu lassen; es muss sichergestellt werden, dass die Klauseln vom Benutzer gelesen wurden und eventuell müsste sogar sichergestellt werden, dass diese verstanden wurden.

Es ist daher beim bisherigen Stand der Technik immer noch üblich, dass sicherheitskritische Dienste erst dann freigeschaltet werden, wenn der sich registrierende Benutzer die allgemeinen Geschäftsbedingungen handschriftlich unterzeichnet hat und dem Dienstanbieter per Post zurückgeschickt oder am Schalter abgegeben hat. Dadurch entsteht sowohl für den Benutzer als auch für den Dienstanbieter ein zusätzlicher administrativer Aufwand, der die Akzeptanz des neuen Dienstes behindert. Ausserdem wird dadurch der gesamte Registrierungsvorgang erheblich verlangsamt.

Es ist eine Aufgabe der vorliegenden Erfindung, ein neues Verfahren und ein neues System vorzuschlagen, die erlauben, die oben erwähnten Nachteile zu verhindern.

Eine andere Aufgabe ist es, ein neues System und Verfahren vorzuschlagen, mit welchem Benutzer von Diensten von Dienstanbietern registriert werden, wobei sichergestellt wird, dass die allgemeinen Geschäftsbedingungen des Dienstanbieters erhalten und gelesen wurden.

Eine andere Aufgabe ist es, ein neues System und Verfahren vorzuschlagen, um sicherzustellen, dass die allgemeinen Geschäftsbedingungen erhalten und gelesen werden, wobei der administrative Aufwand für den Dienstanbieter und für den Benutzer begrenzt werden soll.

Eine andere Aufgabe ist es, ein Verfahren und ein System vorzuschlagen, die zusätzliche Dienste und nützliche Funktionen erlauben.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Verfahren um einen Benutzer in einem Dienst eines Dienstanbieters zu registrieren erreicht, in welchem:
ein Geheimnis wird mit den allgemeinen Geschäftsbedingungen des benannten Dienstes verknüpft,
die benannten allgemeinen Geschäftsbedingungen werden mit dem benannten Geheimnis an den benannten Benutzer gesendet,
der benannte Benutzer gibt das benannte Geheimnis in ein Terminal für den benannten Dienst ein,
das benannte Geheimnis wird in einer elektronischen Meldung an eine Registrierungsplattform gesendet,
das eingegebene und gesendete Geheimnis wird in der benannten Registrierungsplattform mit dem ursprünglichen Geheimnis verglichen,
falls beide Geheimnisse übereinstimmen, wird der benannte Benutzer für weitere Zugriffe auf den benannten Dienst registriert.

Dies hat den Vorteil, dass die Kenntnis des Geheimnisses beweist, dass der Benutzer die allgemeinen Geschäftsbedingungen erhalten und (zumindest teilweise) gelesen hat. Dadurch wird das Risiko, dass ein Benutzer diese Bedingungen teilweise oder gänzlich widerruft, erheblich reduziert.

Das Geheihmins ist eine Information, zum Beispiel eine numerische oder alphanumerische Sequenz, eine biometrische Datei, usw, die vom Benutzer und von der Registrierungsplattform bekannt ist.

In einer bevorzugten Variante wird der Benutzer von der Registierungsplattform authentisert, damit sichergestellt wird, dass die allgemeinen Geschäftsbedingungen vom richtigen Benutzer gelesen wurden.

In einer bevorzugten Variante können die allgemeinen Geschäftsbedingungen mit dem Geheimnis durch einen ganz anderen Übertragungskanal als die Antwort übertragen werden. Das Geheimnis kann sich beispielsweise mitten in einem Text befinden, der auf einem per Post gesendeten oder am Schalter verteilten Schreiben steht. Die Antwort kann beispielsweise über einen elektronischen Übertragungskanal, zum Beispiel SMS, USSD, MMS, e-mail, usw. gesendet werden.

Das erfindungsgemässe Verfahren eignet sich, um neue Benutzer bei vielen unterschiedlichen Diensten zu registrieren, insbesondere für Dienste, auf die die Benutzer über ein Telekommunikationsnetz zugreifen. Das Verfahren ist insbesondere geeignet für Dienste, die sich auf ein Telekommunikationsnetz stützen, in welchem eine zuverlässige Identifizierung des Senders möglich ist - zum Beispiel feste und vor allem mobile telefonische Netze, in welchen Identifizierungsmodulen vorhanden sind. In einer Ausführungsform wird das Verfahren eingesetzt, um neue Benutzer bei Zahlungsdiensten zu registrieren. In diesem Beispiel erfolgen Zahlungstransaktionen über Geldkonten, die von den Zahlungsdienstanbietern und/oder von externen Finanzanbietern betrieben werden. Um sich für eine Transaktion zu identifizieren muss der Benutzer den Besitz eines Identifizierungsmoduls beweisen, wobei mehrere Geldkonten an ein einziges Identifizierungsmodul des Benutzers gebunden sein können.

In einer bevorzugten Variante werden mindestens gewisse Geldkonten von einer Plattform in der Infrastruktur des Mobilfunknetzes betrieben. Transaktionsdaten für Transaktionen mit mehreren Geldkonten, die eventuell von mehreren Zahlungsdienstanbietern und/oder mehreren Finanzinstituten angeboten werden, werden somit durch eine gemeinsame Plattform übertragen und in dieser Zahlungsplattform bewertet. Dies hat den Vorteil, dass ein allfälliger Betrug mit grösserer Sicherheit aufgedeckt werden kann, da das Verhalten der Benutzer mit mehreren unabhängigen Geldkonten überwacht werden kann, und da dieses Verhalten mit Parametern, die nur in der Infrastruktur des Mobilfunknetzes vorhanden sind, korreliert werden kann. Diese Plattform hat ausserdem den Vorteil, dass konsolidierte Rechnungen und Kontoauszüge, welche Transaktionsdaten mit mehreren Geldkonten umfassen, für den Benutzer und/oder zu statistischen Zwecken verwendet werden können. Die verschiedenen Geldkonten eines Benutzers können von verschiedenen Zahlungsdienstanbietern geführt werden. Jeder Zahlungsdienstanbieter kann seine eigenen Geschäftsbedingungen für die Verwendung seines Dienstes festlegen.

Die vorliegende Erfindung wird mit Hilfe der als Beispiel gegebenen Beschreibung besser verständlich und durch die beiliegenden Figuren veranschaulicht:
Die Figur 1 zeigt ein Blockschema, das den Informationsfluss in einer bevorzugten Ausführungsform des Systems der Erfindung zeigt.
Die Figur 2 zeigt ein Blockschema, das mögliche Datenkanäle zwischen den verschiedenen Akteuren des Systems als Beispiel veranschaulicht.
Die Figur 3 zeigt den Informationsfluss zwischen dem Dienstanbieter und dem Benutzer während dem Registrierungsvorgang.

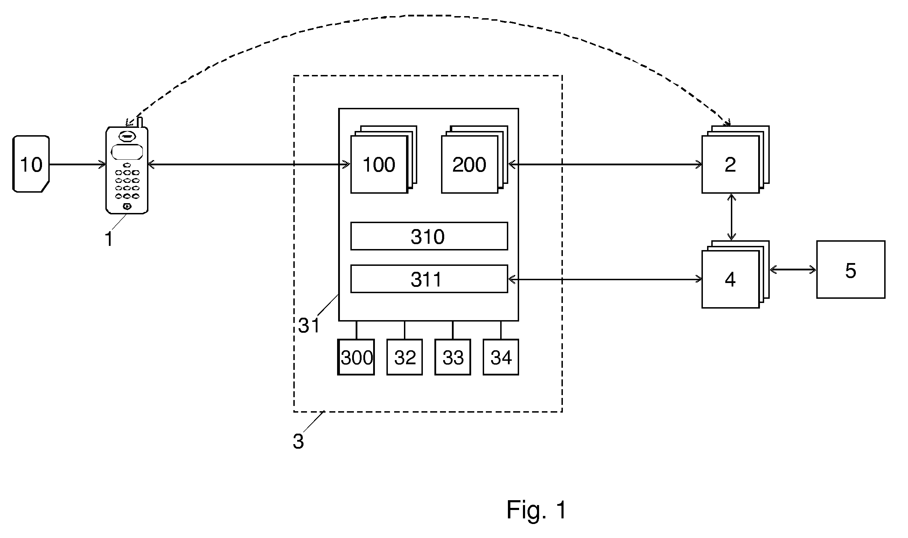

Figur 1 zeigt ein Blockschema mit den Hauptakteuren oder Komponenten des Systems. Im dargestellten Beispiel umfasst das System eine Vielzahl von Benutzern (Mobilteilnehmern), die je über ein Mobilgerät 1 verfügen. Mit "Mobilgerät" werden in diesem Kontext sowohl tragbare Geräte gemeint als auch Geräte, die an einem Fixnetz angeschlossen sind, die aber durch ein Identifizierungsmodul statt durch den Anschlusspunkt an das Netzwerk identifiziert werden.

In der Folge der Beschreibung und in den Ansprüchen wird mit dem Bezugszeichen 1 entweder der Benutzer (Kontoinhaber) oder das Mobilgerät 1 gekennzeichnet, ausser wenn ausdrücklich ein Unterschied gemacht wird. Die Mobilgeräte umfassen ein Identifizierungsmodul 10 zur Identifizierung des Benutzers in einem Mobilfunknetz. Das Identifizierungsmodul 10 ist vorzugsweise persönlich, tragbar, und kann vom Mobilgerät getrennt werden; es ist vorzugsweise eine Chipkarte. Das Mobilgerät 1 kann beispielsweise ein digitales zellulares Mobiltelefon sein (zum Beispiel ein GSM, HSCSD, GPRS, EDGE, CDMA) oder ein UMTS-Mobiltelefon, oder ein Rechner (zum Beispiel ein PDA) oder ein Laptop mit einer kontaktlosen Schnittstelle (zum Beispiel mit einer GSM, HSCSD, GPRS, EDGE, CDMA, UMTS oder WLAN-Erweiterungskarte). Als Variante könnte das Mobilgerät 1 auch ein ad-hoc Gerät sein, das Verbindungen in ein ad-hoc Netzwerk aufbauen kann. Das Identifizierungsmodul 10 ist beispielsweise eine SIM-Karte.

Das Benutzer-Mobilgerät 1 kann an die Infrastruktur 3 eines Mobilnetzwerks angeschlossen werden, um Sprach- und Datenverbindungen mit anderen Geräten aufzubauen. Mit Infrastruktur ist in dieser Beschreibung und in den Ansprüchen jener Teil eines Netzwerkes gemeint, welcher vom Betreiber des Netzwerkes verwaltet und gesteuert wird, einschliesslich die Basis-Stationen, Switches, Heimdateiregister, Verrechnungszentren, Server für zusätzliche Dienste usw. Die Infrastruktur 3 des erfindungsgemässen Systems umfasst eine Zahlungsplattform 31, die später näher beschrieben wird, zusätzliche Module 300, 32, 33, 34 sowie konventionelle Komponenten, die später beschrieben werden.

Ebenfalls an diese Infrastruktur angeschlossen sind eine Vielzahl von Anbietern 2, die den Benutzern 1 gegen Bezahlung Produkte, Informationen oder Dienstleistungen anbieten. Wie später erläutert, können Benutzer 1 manchmal auch Anbieter sein, während Anbieter 2 auch Produkte oder Dienstleistungen von anderen Anbietern oder Benutzer bestellen und bezahlen können, so dass die formelle Trennung zwischen Benutzern und Anbietern eher theoretisch ist. Anbieter können beispielsweise Händler (einschliesslich online Händler, Händler im Detailverkauf, Ticketverkäufer, Telekom-Mehrwertdienstanbieter und/oder Zahlungsautomaten) sein.

Anbieter verfügen über Anbieterzahlungsmodule, zum Beispiel POS-Terminals (Point-of-Sale) oder Zahlungsapplikationen. In der Folge der Beschreibung und in den Ansprüchen wird mit dem Bezugszeichen 2 entweder der Anbieter oder sein Anbieterterminal gekennzeichnet, ausser wenn ausdrücklich ein Unterschied gemacht wird.

Benutzer 1 und/oder Anbieter 2 verwenden die Dienstleistungen von Dienstanbietern 4. Für Zahlungstransaktion zum Beispiel verfügen die Benutzer und die Anbieter je über ein oder mehrere Geldkonten bei einem oder mehreren Finanzinstituten 5 und auf die über eine Vielzahl von Dienstanbietern 4 (in diesem Fall Zahlungsdienstsanbietern) zugegriffen werden kann. Zahlungsdienstanbieter sind beispielsweise Kreditkarten-Firmen, Debitkartenfirmen, Banken, Postämter und anderen Finanzinstitute, die Zahlungskarten herausgeben, einschliesslich der Mobilfunknetzbetreiber. Finanzinstitute sind zum Beispiel Banken, Post und andere Organisation, die Geldkonten von Dritten verwalten. Jeder Zahlungsdienstanbieter 4 bietet einen oder mehrere Dienste an, welche von Benutzern und Anbietern affiliiert werden können. Für jeden affiliierten Zahlungsdienst verfügt ausserdem jeder Benutzer und jeder Anbieter bei den Finanzinstituten über ein Geldkonto. Bei einem Kreditoder Debitkartendienst wird das Geldkonto typischerweise beim Finanzinstitut abgelegt; bei Wertkarten hingegen befindet sich der Geldbetrag in einem Geldkonto in einer Benutzerchipkarte.

Als Sonderfall von Geldkonten, die an eine Karte 10 gebunden sind, sind Mobilfunknetz Prepaid- und Postpaid-Geldkonten zu erwähnen. Diese Geldkonten werden vor allem zur Bezahlung von Diensten des Mobilfunknetzbetreibers verwendet, unter anderem zur Bezahlung von Sprachund Datenverbindungen durch das Netz, zum Kauf von zusätzlichen Diensten, einschliesslich das Nachladen von Ringtönen, Bildern, usw.

Ausser finanzielle Dienste können Dienstanbieter 4 andere Dienste anbieten, beispielsweise um Informationen, Produkte oder andere Dienstleistungen zu liefern.

Dienstanbieter 4 verwenden einen Server, um Benutzer für eine Transaktion oder Dienstleistung zu identifizieren beziehungsweise zu authentifizieren und um eine Transaktion zu gestatten oder zu sperren. Dienstanbieter können ausserdem Schwarzlisten von schlechten Zahlern und unerwünschten Benutzern aufbauen. Clearing-Operationen, Sendung von Rechnungen und Kontoauszügen, Nachladen von Prepaid-Konten und ähnliche Operationen werden auch von individuellen Dienstanbietern 4 (beispielsweise mittels angeschlossenem Finanzrechner 5) durchgeführt.

Gemäss den bisherigen Verfahren bekommt jeder Benutzer eine physische Karte, um seine Affiliation an einen Dienst vor einer Transaktion zu beweisen. Es wird zum Beispiel jedes Geldkonto an eine andere Karte gebunden. Will ein Benutzer für seine verschiedenen Zahlungszwecke mehrere Debit-, Kredit-, und/oder Wertkarten affiliieren, muss er mehrere Zahlungskarten mitführen und für jede Zahlungstransaktion die passende auswählen, was sich als unpraktisch und sicherheitsproblematisch erweist.

In einer bevorzugten Ausführungsform werden mehrere Dienste und Geld konten, die von mehreren Dienstanbietern 4 angeboten werden, an ein gemeinsames Identifizierungsmodul 10 gebunden. In einer bevorzugten Variante dient die SIM-Karte 10, die zur Identifizierung des Benutzers 1 in einem Mobilfunknetz bestimmt ist, als multifunktionelle Karte, die an mehrere Dienste und Geldkonten gebunden ist. Die Affiliation an mehreren Dienste wird somit mit dem Besitz einer einzigen Chipkarte bewiesen.

Umgekehrt kann auch ein einzelner Dienst (zum Beispiel ein bestimmtes Geldkonto) an mehrere Identifizierungsmodule gebunden sein. Dies erlaubt zum Beispiel, dass in einer Familie oder in einem Unternehmen jedes Mitglied über sein eigenes Identifizierungsmodul verfügt, um auf einen gemeinsamen Dienst zuzugreifen.

Das Identifizierungsmodul 10 enthält einen Speicher von jenen Bereichen die vom Mobilfunkbetreiber den Zahlungsdienstanbieter zum Ablegen der benötigten Daten zur Verfügung gestellt werden. Jeder Zahlungsdienstanbieter verwendet somit einen vorbestimmten Speicherbereich der SIM-Karten der affiliierten Benutzer, in welchem er Daten (beispielsweise Kartennummer, Geldbeträge, Spendegrenze, Transaktions-Logfiles, temporäre oder permanente dienstabhängige Daten und Programmen, usw.) ablegen kann. In einer anderen bevorzugten Variante der Erfindung werden diese Daten (oder ein Teil dieser Daten) in einer Zahlungsplattform 31 in der Infrastruktur des Mobilfunknetzes abgelegt. Die verschiedenen Geldkonten, an welche eine Identifizierungskarte 10 gebunden ist, werden somit in einem virtuellen Wallet 100 in der Plattform 3 zusammengeführt. Ein logischer Link zwischen einer physischen Karte 10 und dem entsprechenden Wallet 100 von Geldkonten affilierter Zahlungsdiensten kann beispielsweise über die Kartennummer IMSI (International Mobile Subscriber Identity) die MSISDN (Mobile Subscriber ISDN Number) und/oder die ICCID (Integrated Circuit Chip Identification) erfolgen.

Auf ähnliche Weise können alle Dienste und Geldkonten eines Anbieters 2 in einem Wallet 200 in der Zahlungsplattform 3 zusammengeführt werden, wobei ein logischer Link zwischen einem Anbieter 2 und dem entsprechenden Wallet 200 über eine Anbieter-Identifizierung erfolgen kann.

Das erfindungsgemässe System umfasst ausserdem vorzugsweise ein automatisches Bestimmungsmodul, um das ideale Paar von Geldkonten, welches vom Mobilteilnehmer-Identifizierungsmodul und vom Anbieter-Zahlungsterminal für eine Zahlungstransaktion verwendet wird, automatisch zu bestimmen.

Die Infrastruktur des Mobilfunknetzes 3 umfasst ausserdem vorzugsweise ein Standortbestimmungsmodul 300, um den Standort des Benutzers zu bestimmen. Dieser Standort kann die Zelle des Mobilfunknetzes sein, in welcher sich der Benutzer momentan befindet, oder vorzugsweise mit einer besseren Genauigkeit anhand von Triangulationsverfahren aus Signalen von mehreren Antennen und/oder mit Satelliten-Standortbestimmungsmitteln ermittelt werden. Der ermittelte Standort kann verwendet werden, um Geldkonten in bestimmten Bereichen zu sperren oder zuzulassen.

Ein Cryptoserver 32 ist in der Infrastruktur 3 vorhanden, um Meldungen mit den Benutzern 1, mit den Anbietern 2 und/oder mit den Zahlungsdienstanbietern 4 zu verschlüsseln beziehungsweise zu entschlüsseln. Der Cryptoserver 32 kann auch verwendet werden, um die Authentizität, die Integrität und den Ursprung der Meldung zu prüfen und gegebenenfalls zu bestätigen.

Mit 33 wird ein Betrugsdetektionsmodul veranschaulicht. Dieses Modul verwendet sowohl Parameter, die innerhalb des Mobilfunknetzes bekannt sind (zum Beispiel der Benutzerstandort und der Anbieterstandort) und transaktionsspezifische Parameter (zum Beispiel die Identität der Transaktionspartner oder den Transaktionsbetrag) um verdächtige Transaktionen oder Karten 10 aufzudecken. In einer nicht dargestellten Variante wird dieses Modul von den Dienstanbietern (statt vom Mobilfunknetzbetreiber) betrieben.

Das Element 34 ist eine zentralisierte Registrierungsplattform mit welcher Benutzer sich bei neuen Diensten registrieren können. Weiter unten beschriebene Mittel sind vorgesehen, um sicherzustellen, dass Geschäftsbedingungen der verschiedenen Dienstanbieter 4 von den Benutzern akzeptiert sind, bevor ein Dienst (zum Beispiel ein Geldkonto) freigeschaltet wird. Diese Geschäftsbedingungen können in einer zentralen Datenbank 340 abgelegt sein. Die Datenbank 340 umfasst ausserdem vorzugsweise Referenzgeheimnissen, die mit erhaltenen Geheimnissen zur Freischaltung von Diensten verglichen werden.

Ein proaktives Nachlademodul 311 wird zur automatischen Nachladung der verschiedenen Geldkonten, insbesondere der Wert- und Debitkonten, verwendet, wobei diese Nachladung von verschiedenen Ereignissen initiiert werden kann.

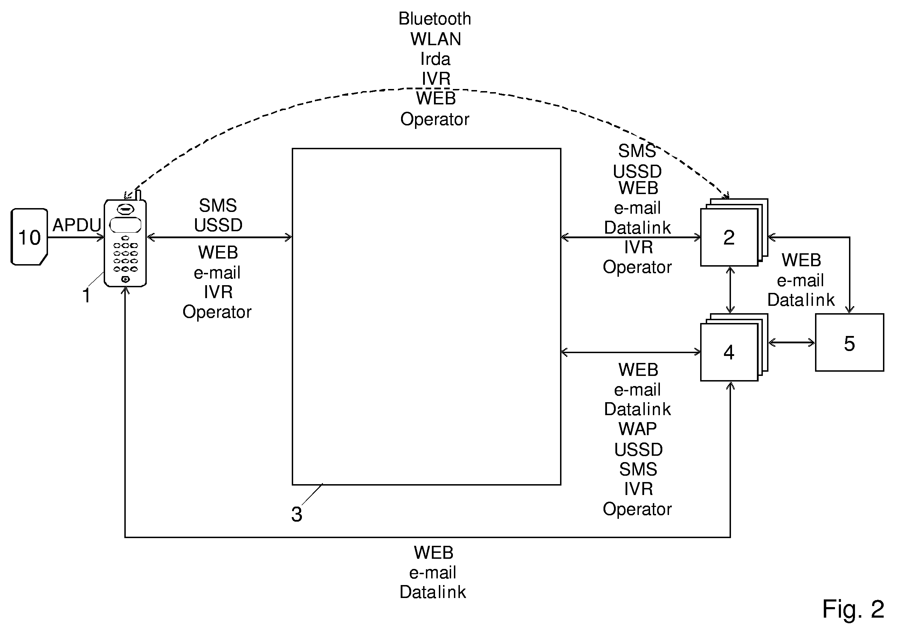

Die Figur 2 zeigt die möglichen Datenkanäle, die für eine Zahlungstransaktion zwischen den verschiedenen Aktoren des Systems verwendet werden können.

Das Identifizierungsmodul 10 wird typischerweise als ISO-Chipkarte im Mobilgerät 1 untergebracht und kommuniziert über APDU-Befehle mit diesem Mobilgerät. Das Mobilgerät ist beispielsweise ein GSM-Mobilgerät und kann somit über SMS (Short Message System) oder USSD (Unstructured Supplementary Service Data) oder über geroutete Datenpakete, Meldungen mit der Plattform 3 austauschen. Als Variante können Daten auch über Internet (zum Beispiel mit einem WEB oder WAP-Browser oder per E-Mail) zwischen dem Mobilgerät 1 und der Plattform 3 übertragen werden. In einer Variante verfügt die Plattform 3 über eine IVR-Schnittstelle (Interactive Voice Response) mit welcher über den Sprachkanal auch Sprachbefehle übertragen werden können. In einer anderen Variante können Daten auch über einen menschlichen Operator (zum Beispiel in einem Call Center) kommuniziert werden. In noch einer anderen Variante werden Daten über eine kontaktlose Schnittstelle (zum Beispiel eine WLAN oder Bluetooth-Schnittstelle) an die Plattform 3 gesendet. Insbesondere Registrationsanträge und allgemeine Geschäftsbedingungen können auch per Post oder Fax übertragen werden.

Auf ähnliche Weise können Anbieter 2 ebenfalls über SMS, USSD, E-Mail, WEB, WAP, über einen IVR und/oder über einen menschlichen Operator, Daten mit der Zahlungsplattform 3 austauschen. Andere Datenverbindungen (zum Beispiel über geroutete Datenpakete oder über einen anderen Datenkanal) können im Rahmen der Erfindung auch vorgesehen werden.

Je nach Zahlungsablauf kann auch eine direkte Verbindung zwischen dem Benutzer 1 und dem Anbieter 2 aufgebaut werden, beispielsweise über Bluetooth, WLAN, WEB (zum Beispiel über eine Transaktionsreferenz), IVR, über einen menschlichen Operator oder über eine infrarote Schnittstelle, oder indem die SIM-Karte oder die gesamte Mobilstation galvanisch mit einem Terminal des Anbieters verbunden wird. Auf diese Weise können zumindest ein Teil der Zahlungsdaten schnell und kostenlos direkt übertragen werden.

Dienstanbieter 4 brauchen keine Mobilität und werden somit vorzugsweise über einen festen Datenlink (zum Beispiel über WEB, E-Mail, geroutete Datenpakete, oder über einen anderen Datenlink) mit der Plattform 3, mit den Benutzern 1, (wenn nötig) mit den Anbietern 2 und gegebenenfalls mit den Finanzservern 5 verbunden. Die Verbindung zwischen der Plattform 31 und den Dienstanbietern 4 ist vorzugsweise gesichert (zum Beispiel über ein virtuelles privates Netzwerk). Dienstanbieter können somit neue Dienste dynamisch anbieten, neue allgemeine Geschäftsbedingungen in der Datenbank 340 ablegen, und neue Geheimnisse an die Registrationsplattform senden. Transaktionsdaten zwischen der Plattform 31 und den Dienstanbietern können auch in Daten die mehrere Transaktionen betreffen gesendet werden. Verbindungen mit den Benutzern 1 und mit den Anbietern 2 können auch über Fax oder Post vorgesehen werden.

Wie bereits erwähnt können sowohl Benutzer 1 als auch Anbieter 2 an mehrere Zahlungsdienste mehrerer Zahlungsdienstanbieter 4 affiliiert werden. Dementsprechend können Identifizierungsmodule 10 und Terminals der Anbieter an mehrere Geldkonten 100 beziehungsweise. 200 gebunden werden. Will ein Benutzer 1 eine Transaktion mit einem Anbieter 2 ausführen, muss vorerst entschieden werden, mit welchem Zahlungsdienst die Transaktion durchgeführt wird. Beispielsweise muss entschieden werden, ob eine Transaktion mit einem Kreditkarten-, Debitkarten- oder Wertkarten-Zahlungsdienst durchgeführt wird und mit welchem Anbieter dieses Typs von Diensten. Diese Entscheidung wird vorzugsweise automatisch vom Bestimmungsmodul 310 getroffen. In der dargestellten bevorzugten Ausführungsform befindet sich dieses Modul in der Plattform 31 und wird somit vom Betreiber des Mobilfunknetzes betrieben. Dies hat den Vorteil, dass dieser Betreiber gegenüber den verschiedenen Dienstanbietern neutral sein kann und dass kein Anbieter bevorzugt wird. Ausserdem kann das Modul 310 Parameter verwenden, die innerhalb der Infrastruktur des Netzes bestimmt und bekannt sind.

Das Bestimmungsmodul besteht vorzugsweise aus einem Software und/oder Hardware-Modul, beispielsweise aus einer Software-Anwendung, die von einem Server in der Infrastruktur 3 des Mobilfunknetzes ausgeführt wird. Der Server kann über verschiedene Datenkanäle mit den Mobilgeräten 1, mit den Terminals der Anbieter 2 und mit den Dienstanbietern 4 kommunizieren.

Aus Datenschutzgründen werden Transaktionsdaten vorzugsweise transparent durch das Mobilfunknetz übertragen; der Betreiber der Plattform 3 hat in diesem Fall keine Möglichkeit, auf die Daten der unterschiedlichen Benutzer oder Anbieter zuzugreifen. In einer Variante werden mindestens gewisse Transaktionsdaten, die für mindestens gewisse Dienstanbieter bestimmt sind, vorzugsweise mit Zustimmung der Benutzer oder Anbieter der Plattform zugänglich gemacht. Dies hat den Vorteil, dass die Plattform mit den Daten verschiedener Benutzer, Anbieter und Dienstanbieter zusätzliche Mehrwertdienste anbieten kann.

In einer bevorzugten Variante werden Transaktionsdaten anonymisiert, bevor sie der Plattform zugänglich gemacht werden. Zu diesem Zweck wird die Benutzeridentifikation, die mit bestimmten Transaktionsdaten verknüpft ist, in einem Anonymizer durch ein für den Netzbetreiber ungenügend kennzeichnendes Alias ersetzt. Auf diese Weise können anonyme Daten in der Plattform gesammelt, verwendet und statistisch bewertet werden, ohne Datenschutzgesetze zu verletzen.

Zur Detektion von Betrügen werden vorzugsweise sowohl Parameter des Mobilfunknetzes 3 als auch Parameter des oder der Dienstanbieter 4 verwendet. Im dargestellten Beispiel werden Betrüge von einem Betrugsdetektionsmodul 33 (zu Beispiel ein Server mit geeigneten Software-Anwendungen) in der Infrastruktur des Mobilfunknetzes 3 ermittelt.

Wir werden jetzt das erfindungsgemässe Verfahren zur Registrierung von Benutzern an den Dienst eines Dienstanbieters 4 näher beschreiben.

Damit ein Benutzer auf einen bestimmten Dienst zugreifen darf, muss er sich in vielen Fällen registrieren. Die Registration ist der einmalige Prozess, bei welchem ein Benutzer 1 bei einem Dienstanbieter 4 beantragt, auf einen bestimmten Dienst zugreifen zu dürfen. Wird der Antrag bewilligt, kann der Dienst freigeschaltet werden. Die Registrierung kann die Eröffnung eines Benutzeraccounts beim Dienstanbieter 4 und/oder in der Plattform 3 umfassen, und je nach Dienst die Sendung von Daten und/oder Programmteilen an das Mobilgerät des Benutzers 1.

Die Registrierung ist je nach Dienst permanent oder muss periodisch oder nach einer gewissen Anzahl von Zugriffen wiederholt werden.

Damit die Registrierung bewilligt wird, muss der Benutzer vorerst authentisiert werden, so dass kein Zweifel über seine Identität besteht. Dies erfolgt, indem der Benutzer 11 einen Registrierungsantrag an die Registrierungsplattform 34 oder an den Dienstanbieter 4 sendet. In einer bevorzugten Variante erfolgt der Registrierungsprozess über die gemeinsame Registrierungsplattform 34, die die Anträge von den Benutzern empfängt und an die verschiedenen Dienstanbieter weiterleitet. Diese Plattform wird vorzugsweise vom Betreiber des Mobilfunknetzes 3 betrieben, der die Identität der Sender von Registrierungsmeldungen leicht und zuverlässig anhand von Daten aus dem Identifizierungsmodul 10 erkennen und prüfen kann.

Die Benutzung der verschiedenen Dienste wird allgemeinen Geschäftsbedingungen (AGB) unterstellt, die von den Dienstanbietern 4 und/oder vom Betreiber der Registrierungsplattform 34 festgelegt werden. Damit diese AGB von Gerichten anerkannt werden, muss zumindest sichergestellt werden, dass der Benutzer 11 sie vor oder während dem Registrierungsvorgang erhalten hat. Man sollte ausserdem vernünftigerweise davon ausgehen können, dass er diese AGB tatsächlich gelesen hat, oder dass er sie gelesen haben sollte.

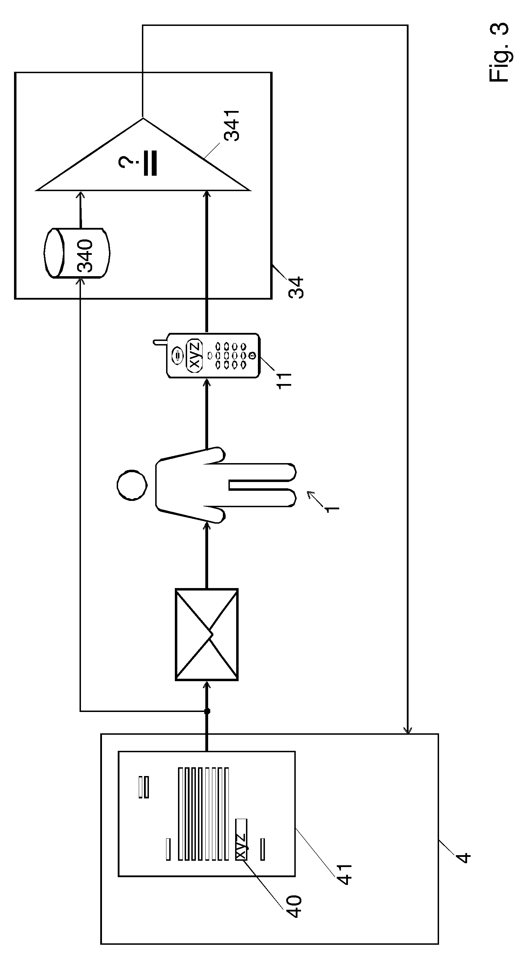

Ein Benutzer 11, der einen neuen Dienst registrieren will, erhält ein Registrierungsantragsformular welchem die benannten allgemeinen Geschäftsbedingungen 41 (Figur 3) beigelegt sind. Der Antrag und die allgemeinen Geschäftsbedingungen können durch irgend einen Kanal an potentielle Benutzer gesendet werden (zum Beispiel direkt am Schalter, per Post, per E-mail, per Fax, per MMS, auf einer WEB-Seite dargestellt, usw.). Die Antwort mit dem ausgefüllten Antrag kann über den gleichen, oder über einen anderen Kanal, an die Registrierungsplattform 34 und/oder an den Dienstanbieter 4 gesendet werden. Der Benutzer kann beispielsweise einen schriftlichen Antrag ausfüllen und unterzeichnen, oder einen elektronischen signierten Antrag zurücksenden.

Erfindungsgemäss wird der Dienst erst dann freigeschaltet, wenn der Benutzer den Beweis erbracht hat, dass er die allgemeinen Geschäftsbedingungen 41 des gewünschten Dienstes erhalten hat. Zu diesem Zweck wird ein vom Dienstanbieter 4 oder vom Mobilfunknetzbetreiber festgelegtes Geheimnis 40 mit diesen allgemeinen Geschäftsbedingungen 41 derart verknüpft, dass der Benutzer dieses Geheimnis erst dann erfahren kann, wenn er die AGB erhalten und zumindest teilweise gelesen und/oder verstanden hat.

Das Geheimnis 40 besteht beispielsweise aus einer numerischen oder alphanumerischen Sequenz, aus einem Bild, oder aus einer biometrischen Datei. Es wird beispielsweise den allgemeinen Geschäftsbedingungen beigelegt, oder vorzugsweise im Text der AGB derart integriert, dass niemand das Geheimnis erraten kann, ohne substanzielle Teile von diesen AGB zu lesen. Das Geheimnis wird vorzugsweise in den AGB derart versteckt, dass ein maschinelles Lesen und eine automatische Registration erschwert wird. Das Geheihmis kann beispielsweise in variierend Stellen in den AGB stehen, oder in ungewöhnlichen Schriften, die von OCT-Systeme schwer zu erkennen sind, geschrieben werden. Das Geheimnis kann auch aus Teilen der AGB selbst kombiniert werden (zum Beispiel aus einem bestimmten wichtigen Wort oder Abschnitt, aus dem ersten Buchstaben jeder Zeile, aus Fragen über den Inhalt der AGB, usw.).

Um den gewünschten Dienst freizuschalten, gibt der Benutzer 1 das Geheimnis 40 in seinem Terminal für den gewünschten Dienst ein. Das Geheimnis kann zusammen mit dem Registrierungsantrag gesendet werden, oder separat über einen anderen Übertragungskanal. Im dargestellten Beispiel bereitet der Benutzer eine elektronische Meldung mit seinem zellularen Mobilgerät vor, in welcher das Geheimnis 40 (oder äquivalent eine Funktion des Geheimnisses) verpackt ist und sendet diese Meldung an die Registrierungsplattform 34 bei der Plattform 3 des Mobilfunknetzbetreibers oder dem Dienstanbieter 4. Die Meldung ist beispielsweise eine SMS, MMS oder USSD-Meldung, so dass die Identität des Senders leicht und zuverlässig geprüft werden kann. Das Geheimnis könnte aber auch durch andere Übertragungskanäle, zum Beispiel per E-Mail, über eine WEB- oder WAP-Seite, oder per Post, gesendet werden, obwohl in diesem Fall andere Mittel vorgesehen werden müssten, um den Sender einer Registrierungsmeldung zuverlässig zu authentisieren.

Die Registrierungsplattform 34 empfängt die Meldung und identifiziert und/oder authentisiert den Sender, vorzugsweise mit der A-Nummer, die in einem ISDN oder Mobilfunknetz das Gerät des Senders kennzeichnet. Zusätzliche Authentisierungsmechanismen, zum Beispiel mit einem Passwort, IVR, usw, können verwendet werden. Die elektronische Adresse, die somit erhalten wird, wird in einer nicht dargestelleten Datenbank mit der Identifizierung des Benutzers verknüpft, der das Registrierungsantragformular erhalten hat und für den den registrierten Dienst freigeschaltet werden muss. Wird die Registrierungsplattform 34 vom Betreiber des Telekommunikationsnetzes verwaltet, kann zu diesem Zweck die Abonnentendatenbank verwendet werden.

In der Registrierungsplattform 34 wird das vom Benutzer 1 eingegebene und gesendete Geheimnis mit einem Referenzgeheimnis in der Datenbank 340 durch ein Vergleichsmodul 341 verglichen. Der Benutzer wird für weitere Zugriffe auf den gewünschtenDienst erst dann registriert, wenn beide Geheimnisse übereinstimmen.

Das Geheimnis wird vorzugsweise von der zuständigen Partei, die die allgemeinen Geschäftsbedingungen auferlegt, festgelegt. In der Regel wird dieses Geheimnis somit vom Dienstanbieter 4 festgelegt, könnte aber auch vom Betreiber der Plattform 3 definiert werden. Das Geheimnis, oder eine Liste von gültigen Geheimnissen, oder andere Regeln oder Mechanismen zur Prüfung von erhaltenen Geheimnissen, wird dann an die Registrierungsplattform 34 gesendet, die Registrierungsanträge mit den Registrierungsmeldungen empfängt und prüft.

Das Geheimnis, das für den Zugriff auf einen Dienst verlangt wird, kann für alle Benutzer das gleiche sein. Für mehr Sicherheit können in einer bevorzugten Ausführungsform benutzerabhängige und/oder zeitbegrenzte Geheimnisse verwendet werden.

Bestimmte Dienste können für bestimmte Benutzer nur mit der Bewilligung eines oder mehrerer anderer Benutzer freigeschaltet werden. Dies ist zum Beispiel der Fall für Dienste, die Kindern mit der Zulassung der Eltern angeboten werden. Für solche Dienste kann verlangt werden, dass die Eltern, oder andere durch einen Dienstvertrag angegliederte Benutzer, das Geheimnis an die Registrierungsplattform 34 senden. Der gewünschte Dienst wird erst dann freigeschaltet, wenn der Beweis erbracht wurde, dass der oder die angegliederten Benutzer die allgemeinen Geschäftsbedingungen gelesen haben.

Das gesendete Geheimnis kann auch Parameter umfassen (oder äquivalent mit Parametern verknüpft sein) um unterschiedliche Bedingungen und/oder Dienste zu akzeptieren oder registrieren. Auf diese Weise können Benutzer eine von mehreren angebotenen Alternativen in den Geschäftsbedingungen wählen. Für einen Zahlungsdienst können beispielsweise Benutzer unterschiedliche Kredit- oder Debitgrenzen auswählen.

In einer bevorzugten Variante werden somit in einer gemeinsamen Registrierungsplattform 34 Geheimnisse von mehreren Dienstanbietern 4 abgelegt und geprüft. Auf diese Weise können Benutzer mehrere Dienste mit einer gemeinsamen Schnittstelle registrieren.

Wenn das Vergleichmodul 341 feststellt, dass das empfangene Geheimnis richtig ist, wird nach der eventuellen Prüfung von zusätzlichen Kriterien der gewünschte Dienst für den Benutzer 1 freigeschaltet. Dies kann erfolgen, indem eine Freischaltungsmeldung von der Registrierungsplattform 34 an den Dienstanbieter 4 gesendet wird.

Das erfindungsgemässe Verfahren kann auch verwendet werden, um Dienste mit einem Mobilgerät zu registrieren, die nicht mit diesem Mobilgerät durchgeführt werden. Beispielsweise können auch Internet-Dienste, auf welche ein Benutzer über ein Internet-Terminal zugreift, durch Sendung von Geheimnissen in einer Meldung, die durch ein Mobilfunknetz übertragen wird, registriert werden.

## Patentansprüche

1. Verfahren, um einen ersten Benutzer (1) bei einem Dienst eines Dienstanbieters (4) zu registrieren, umfassend:
ein Geheimnis (40) wird mit allgemeinen Geschäftsbedingungen (41) für den benannten Dienst verknüpft,
die benannten allgemeinen Geschäftsbedingungen werden mit dem benannten Geheimnis an den ersten Benutzer (1) gesendet,
der erste Benutzer (1) gibt das benannte Geheimnis in einem Terminal (11) ein,
das benannte Geheimnis wird in einer elektronischen Meldung an eine Registrierungsplattform (34) gesendet,
das gesendete Geheimnis (40) wird in der benannten Registrierungsplattform (34) mit dem ursprünglichen Geheimnis verglichen,
falls beide Geheimnisse übereinstimmen, wird der benannte Benutzer für weitere Zugriffe auf den benannten Dienst registriert.

2. Verfahren gemäss Anspruch 1, in welchem das benannte Terminal ein zellulares Mobilgerät ist, mit welchem der registrierte Dienst ausgeführt wird.

3. Verfahren gemäss Anspruch 2, in welchem das benannte Geheimnis in einer USSD-Meldung gesendet wird.

4. Verfahren gemäss Anspruch 2, in welchem das benannte Geheimnis in einer SMS-Meldung gesendet wird.

5. Verfahren gemäss einem der Ansprüche 1 bis 4, in welchem die benannten allgemeinen Geschäftsbedingungen (41) mit dem benannten Geheimnis (40) per Post oder E-Mail gesendet werden.

6. Verfahren gemäss einem der Ansprüche 1 bis 5, in welchem das benannte Geheimnis (40) mit den allgemeinen Geschäftsbedingungen (41) des benannten Dienstes derart verknüpft wird, dass der erste Benutzer (1) gezwungen ist, mindestens einen Teil der benannten allgemeinen Geschäftsbedingungen zu lesen, um das Geheimnis zu erfahren.

7. Verfahren gemäss einem der Ansprüche 1 bis 6, in welchem das benannte Geheimnis (40) vom benannten Dienstanbieter (4) festgelegt wird, und in welchem die benannte Registrierungsplattform (34) von einem anderen Anbieter betrieben wird.

8. Verfahren gemäss einem der Ansprüche 1 bis 7, in welchem das benannte Geheimnis (40) benutzerabhängig ist.

9. Verfahren gemäss einem der Ansprüche 1 bis 8, in welchem die benannten allgemeinen Geschäftsbedingungen mit dem benannten Geheimnis an einen zweiten Benutzer gesendet werden,
in welchem der zweite Benutzer das benannte Geheimnis (40) an einem Terminal eingibt und in einer elektronischen Meldung an die benannte Registrierungsplattform (34) sendet,
in welchem das gesendete Geheimnis (40) in der benannten Registrierungsplattform (34) mit dem ursprünglichen Geheimnis verglichen wird,
und in welchem der erste Benutzer für weitere Zugriffe auf den benannten Dienst registriert wird, falls beide Geheimnisse übereinstimmen.

10. Verfahren gemäss Anspruch 9, in welchem der erste Benutzer (1) und der zweite Benutzer durch einen Dienstvertrag aneinander gebunden sind.

11. Verfahren gemäss einem der Ansprüche 1 bis 10, in welchem Geheimnisse von mehreren Benutzern gesendet und mit gespeicherten Geheimnissen verglichen werden.

12. Verfahren gemäss einem der Ansprüche 1 bis 11, in welchem das benannte Geheimnis (40) Parameter umfasst, um unterschiedliche Bedingungen und/oder Dienste zu registrieren.

13. Verfahren gemäss einem der Ansprüche 1 bis 11, in welchem das benannte Geheimnis (40) an eine Registrierungsplattform (31) gesendet und verglichen wird, in welcher eine Vielzahl von Diensten von mehreren Dienstanbietern (3) betrieben wird.

14. Verfahren gemäss Anspruch 13, in welchem die benannte Registrierungsplattform (31) sich in der Infrastruktur eines Mobilfunknetzes befindet.

15. Verfahren gemäss Anspruch 14, in welchem der erste Benutzer der benannten Registrierungsmeldung mit Daten aus seinem Identifizierungsmodul vom Betreiber des benannten Mobilfunknetzes (3) identifiziert wird.

16. Verfahren gemäss einem der Ansprüche 1 bis 11, in welchem das benannte Geheimnis an den Dienstanbieter gesendet wird.

17. Verfahren gemäss einem der Ansprüche 1 bis 15, in welchem die benannte Meldung elektronisch signiert wird.

18. Verfahren gemäss einem der Ansprüche 1 bis 15, in welchem der benannte Dienst ein an ein Identifizierungsmodul gebundener Zahlungsdienst ist.

19. Registrierungsplattform (34), um Benutzer (1) an Dienste einer Vielzahl von Dienstanbietern (4) zu registrieren, umfassend:
ein Vergleichsmodul (341) zur Prüfung von über ein Mobilfunknetz erhaltenen Registrierungsmeldungen und zur Freischaltung von Diensten für weitere Zugriffe, wenn das Ergebnis des Vergleichs positiv ist.

20. Registrierungsplattform gemäss Anspruch 19, mit einem Speicherbereich (340) zur Speicherung von Referenzgeheimnissen, und in welchem das benannte Vergleichsmodul (341) in den benannten Registrierungsmeldungen enthaltenen Geheimnisse mit den benannten Referenzgeheimnissen vergleicht.

21. Registrierungsplattform gemäss einem der Ansprüche 19 oder 20, in welchem der benannte Dienst für den Benutzer registriert wird, der durch die Identität des Senders der benannten Registrierungsmeldung identifiziert wird.
